# EUROPÄISCHE PATENTSCHRIFT

(11) **EP 4 197 305 B1**
(45) Veröffentlichungstag und Bekanntmachung des Hinweises auf die Patenterteilung: **15.04.2026**
(21) Anmeldenummer: 22200580.3
(22) Anmeldetag: 10.10.2022
(51) Int. Cl.: A01B 59/00, A01B 59/041

(54) **ARRETIERUNGSEINRICHTUNG FÜR EINEN SEITENSTABILISATOR EINES DREIPUNKT-KRAFTHEBERS**
LOCKING DEVICE FOR A SIDE STABILIZER OF A THREE-POINT POWER LIFT
DISPOSITIF DE VERROUILLAGE POUR UN STABILISATEUR LATÉRAL D'UN RELEVAGE À TROIS POINTS

(30) Priorität: 17.12.2021 DE 102021133598
(43) Veröffentlichungstag der Anmeldung: 21.06.2023
(73) Patentinhaber: Deere & Company, Moline, IL 61265 (US)
(72) Erfinder: HINGNE, ABHIJIT, 68163 Mannheim (DE); ONKEN, HANKO, 68163 Mannheim (DE)
(74) Vertreter: Dehnhardt, Florian Christopher

(56) Entgegenhaltungen:
- DE-C1- 4 310 027
- JP-U- S52 109 103
- US-A1- 2007 209 810

## Beschreibung

Die Erfindung betrifft eine Arretierungseinrichtung mit einem Seitenstabilisator und einer an einem Dreipunkt-Kraftheber befestigbaren Halterung, wobei der Seitenstabilisator mittels eines Lagerbolzens schwenkbar an der Halterung angebracht ist.

Derartige Seitenstabilisatoren ermöglichen es je nach Betriebsstellung eines von einem landwirtschaftlichen Traktor umfassten Dreipunkt-Krafthebers, seitliche Auslenkungen eines Unterlenkers des Dreipunkt-Krafthebers in einer angehobenen Transportstellung zu blockieren oder aber in einer abgesenkten Arbeitsstellung in gewissem Umfang zuzulassen. Hierzu ist der Seitenstabilisator mit einem ersten Ende an einer im Heckbereich des landwirtschaftlichen Traktors angebrachten Halterung und mit einem zweiten Ende mit dem Unterlenker des Dreipunkt-Krafthebers gelenkig befestigt. Genauer gesagt weist der Dreipunkt-Kraftheber zur Anbringung eines zugehörigen landwirtschaftlichen Anbaugeräts linke und rechte Unterlenker auf, wobei im Allgemeinem jedem der beiden Unterlenker ein separater Seitenstabilisator zugeordnet ist. Die Unterlenker lassen sich hierbei mittels eines hydraulischen Hubwerks auf Veranlassung eines Bedieners zwischen der angehobenen Transportstellung und der abgesenkten Arbeitsstellung verschwenken.

Ein derartiger Seitenstabilisator ist beispielsweise aus der DE 602 00 422 T2 bekannt. Der Seitenstabilisator umfasst ein erstes und ein zweites Stabilisatorglied, wobei die beiden Stabilisatorglieder mechanisch derart miteinander gekoppelt sind, dass sich diese entlang einer gemeinsamen Stabilisatorlängsachse zueinander bewegen können. Eine an dem ersten Stabilisatorglied schwenkbar angelenkte Sperrklappe dient der Längsverriegelung der beiden Stabilisatorglieder abhängig von der Betriebsstellung des Dreipunkt-Krafthebers, wozu sich eine in der Sperrklappe vorgesehene Ausnehmung mit einem an dem zweiten Stabilisatorglied ausgebildeten Vorsprung in Eingriff bringen lässt. Je nach Stellung der Sperrklappe kann daher eine Seitwärtsbewegung eines an dem Seitenstabilisator angebrachten Unterlenkers entweder vollständig unterbunden oder aber im Rahmen der baulichen Gegebenheiten des Seitenstabilisators freigegeben werden.

Daneben existieren hydraulisch gesteuerte Seitenstabilisatoren, bei denen die mechanische Kopplung der beiden Stabilisatorglieder mittels eines Hydraulikzylinders erfolgt. Der Aufbau eines solchen Seitenstabilisators ist stellvertretend in der EP 3 721 690 A1 beschrieben. Demgemäß weist der Hydraulikzylinder einen Zylinderraum auf, der über einen Hydraulikanschluss mit unter Druck stehender Hydraulikflüssigkeit beaufschlagt werden kann, sodass sich ein darin längsverschiebbar gelagerter Kolben in einen vollständig ausgeschobenen Zustand überführen lässt. Ist jedem der beiden Unterlenker ein eigener Seitenstabilisator zugeordnet, so erlaubt es dies, die Unterlenker bei angebrachtem Anbaugerät in einer zentrierten Mittenstellung gegeneinander zu verspannen. Unerwünschte Seitwärtsbewegungen des Anbaugeräts in der angehobenen Transportstellung lassen sich so ausschließen. Bei Druckentlastung hingegen kann sich der Kolben frei innerhalb des Zylinderraums bewegen, was die Ausführung seitwärts gerichteter Ausgleichsbewegungen des Anbaugeräts in der abgesenkten Arbeitsstellung während der Feldbearbeitung möglich macht.

Gerade bei der Ausführung von Transportarbeiten mit einem gezogenen Anhänger ist es zur Erzielung eines möglichst geringen Wendekreises wünschenswert, wenn der seitliche Bewegungsfreiraum einer im Heckbereich des landwirtschaftlichen Traktors angebrachten Zugdeichsel nicht durch angrenzende Komponenten des Dreipunkt-Krafthebers behindert wird. In solchen Fällen ist es daher gängige Praxis, die Unterlenker vollständig abzubauen. Dies erfordert jedoch zugleich eine Demontage der Seitenstabilisatoren, was für den Fall, dass diese hydraulisch steuerbar sind, angesichts der dann zu lösenden Hydraulikverbindungen vergleichsweise aufwändig ist.

Weitere bekannte Arretierungseinrichtungen werden in US 2007/209810 A1, DE 43 10 027 C1 und JP S52 109103 U beschrieben.

Es ist daher Aufgabe der vorliegenden Erfindung, eine Arretierungseinrichtung der eingangs genannten Art im Hinblick auf einen vereinfachten Abbau der Unterlenker auszubilden. Diese Aufgabe wird durch eine Arretierungseinrichtung mit den Merkmalen des Patentanspruchs 1 gelöst.

Die erfinderische Arretierungseinrichtung ist im Anspruch 1 definiert.

Eine Demontage des Seitenstabilisators bei abgenommenem Unterlenker erübrigt sich in diesem Fall, dieser kann nach dem Verbringen in die vorgegebene Ruheposition am Dreipunkt-Kraftheber verbleiben. Die Ruheposition wird derart gewählt, dass der Seitenstabilisator einer Seitwärtsbewegung einer im Heckbereich des landwirtschaftlichen Traktors anbringbaren Zugdeichsel möglichst nicht im Wege liegt.

Vorteilhafte Weiterbildungen der erfindungsgemäßen Arretierungseinrichtung gehen aus den Unteransprüchen hervor.

Die Halterung kann erste und zweite Seitenwangen aufweisen, die ein an dem Seitenstabilisator vorgesehenes Befestigungsgelenk umgreifen, wobei sich der Lagerbolzen zur schwenkbaren Anbringung des Seitenstabilisators durch die beiden Seitenwangen sowie das Befestigungsgelenk hindurcherstreckt. Bei der Halterung handelt es sich beispielsweise um ein aus Stahlblech hergestelltes u-förmiges Blechbiegeteil, das über ein die beiden Seitenwangen verbindendes Querstück mittels mehrerer Gewindeschrauben an einer Montageschnittstelle des Dreipunkt-Krafthebers anbringbar ist. Die beiden Seitenwangen verlaufen parallel zueinander, wobei Lagerbolzen und Haltebolzen durch jeweils miteinander fluchtende Bohrungen hindurchgesteckt und mittels zugehöriger Wellensicherungen darin befestigt sind.

Im Sinne einer komfortablen Handhabung des Seitenstabilisators weist der erfindungsgemäßen Verschlussmechanismus einen federvorgespannten Fanghaken zur lösbaren Ineingriffnahme eines an der Halterung vorgesehenen Haltebolzens auf.

Der Verschlussmechanismus kann in diesem Fall verliersicherer Bestandteil des Seitenstabilisators sein.

Des Weiteren kann an dem Seitenstabilisator als Bestandteil des Verschlussmechanismus eine sich in Schwenkrichtung öffnende Ausnehmung zur formschlüssigen Aufnahme einer Anlagekontur des Haltebolzens ausgebildet sein, wobei sich der Haltebolzen mittels des Fanghakens innerhalb der Ausnehmung festlegen lässt. Die Ausnehmung kann in einem an einer Oberseite des Seitenstabilisators einstückig ausgebildeten Verschlussgehäuse verlaufen. Der Formschluss zwischen der Anlagekontur und der Ausnehmung erfolgt hierbei unter Berücksichtigung eines aus Gründen der Verschmutzungstoleranz vorgesehenen Lagerspiels.

Daneben ist es möglich, dass ein Betätigungselement zur manuellen Auslenkung des Fanghakens in eine die Ausnehmung freigebende Stellung vorhanden ist. Das Betätigungselement kann insbesondere als am Verschlussgehäuse hervorstehendes Griffstück ausgebildet sein, das entgegen einer auf den Fanghaken wirkenden Federvorspannung zum Zwecke der Entriegelung des Verschlussmechanismus von Hand betätigbar ist.

Zusätzlich besteht die Möglichkeit, dass der Fanghaken einen rampenförmigen Betätigungsabschnitt derart aufweist, dass der Haltebolzen den Fanghaken beim Verschwenken des Seitenstabilisators in Richtung der vorgegebenen Ruheposition in eine die Ausnehmung freigebende Stellung wegdrängt. Der Verschlussmechanismus bildet somit einen Schnappverschluss, bei dem der unter Federvorspannung stehende Fanghaken unter Verriegelung des Seitenstabilisators von selbst in seine Ausgangslage zurückkehrt, sobald der Haltebolzen seine endgültige Lage innerhalb der Ausnehmung eingenommen hat.

Der Seitenstabilisator kann in der vorgegebenen Ruheposition bezüglich einer für den Betrieb am Dreipunkt-Kraftheber vorgesehenen bzw. spezifizierten Einbaulage schräg aufwärts gestellt sein. Ein unerwünschter Kontakt zwischen einer im Heckbereich des landwirtschaftlichen Traktors anbringbaren Zugdeichsel mit dem Seitenstabilisator lässt sich dann weitgehend ausschließen.

Die erfindungsgemäße Arretierungseinrichtung für einen Seitenstabilisator eines Dreipunkt-Krafthebers wird im Folgenden anhand der beigefügten Zeichnungen näher beschrieben. Dabei beziehen sich identische Bezugszeichen auf übereinstimmende oder bezüglich ihrer Funktion vergleichbare Komponenten. Es zeigen:
- Fig. 1: ein Dreipunkt-Kraftheber an einem landwirtschaftlichen Traktor, umfassend eine erfindungsgemäße Arretierungseinrichtung für einen Seitenstabilisator,
- Fig. 2: der in Fig. 1 gezeigte Seitenstabilisator in einer vorgegebenen Ruheposition, und
- Fig. 3 a-c: eine schrittweise dargestellte Verriegelungssequenz beim Verschwenken des in Fig. 1 gezeigten Seitenstabilisators in die vorgegebene Ruheposition.

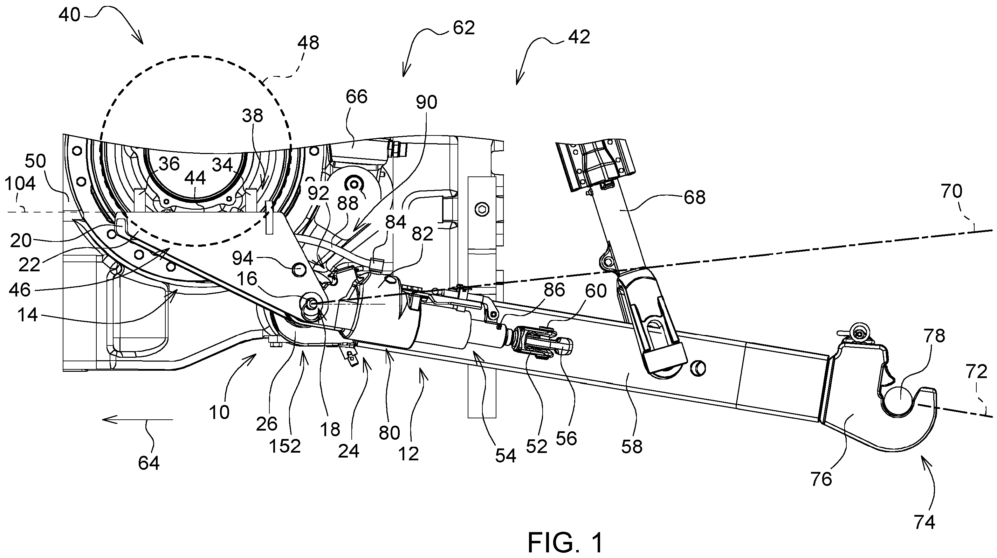

Fig. 1 zeigt ein Ausführungsbeispiel der erfindungsgemäßen Arretierungseinrichtung.

Die Arretierungseinrichtung 10 umfasst einen Seitenstabilisator 12 sowie eine Halterung 14, an der der Seitenstabilisator 12 mittels eines Lagerbolzens 16 schwenkbar um eine quer zur Halterung 14 verlaufende Drehachse 18 angebracht ist.

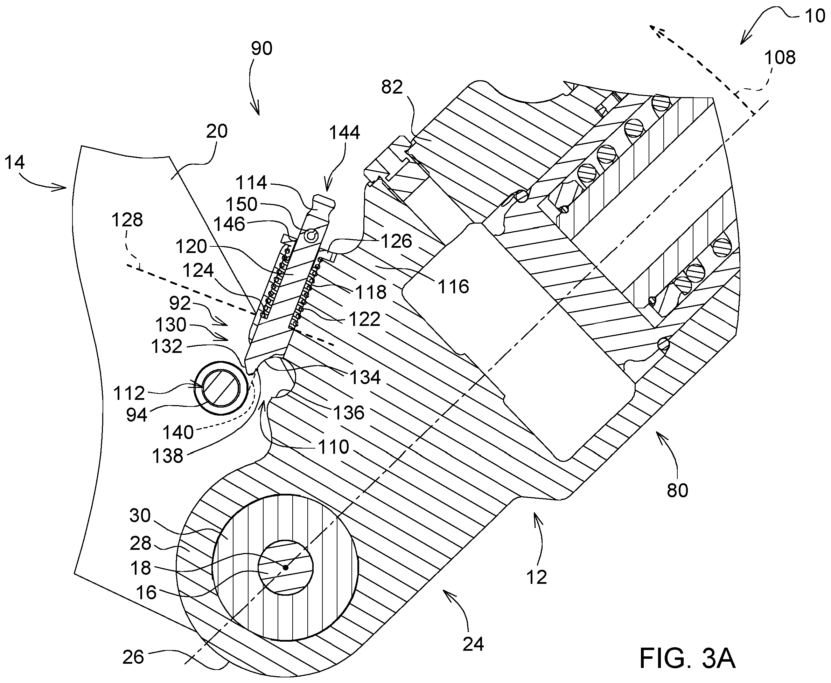

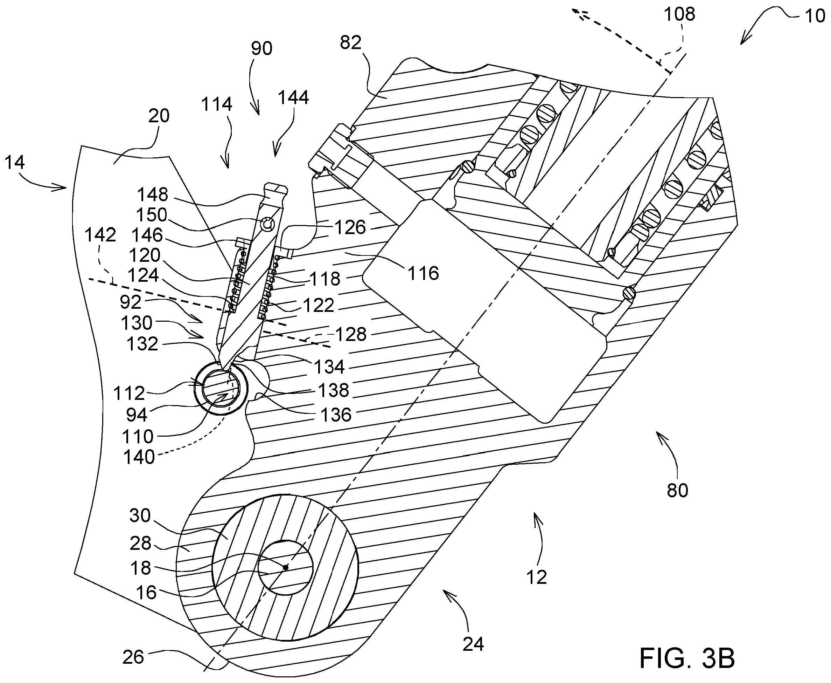

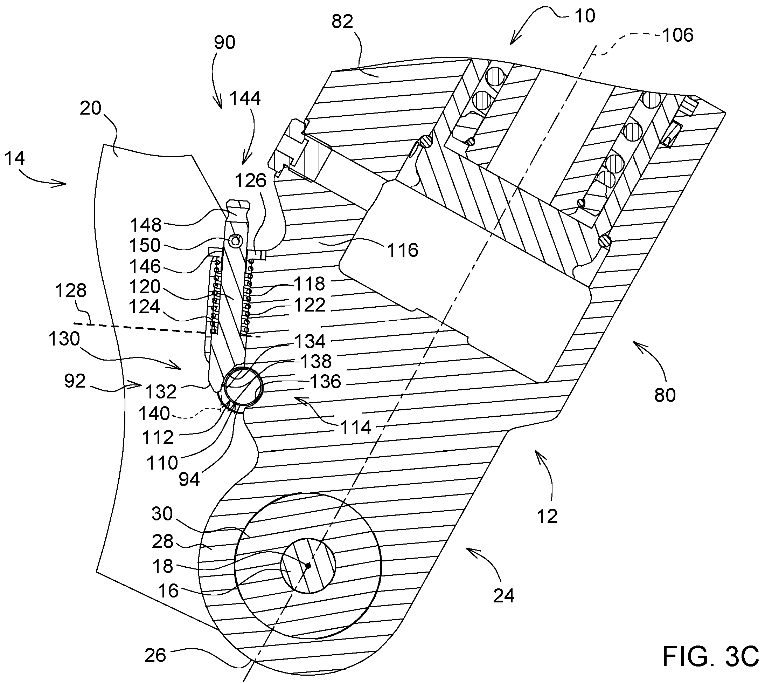

Beispielsgemäß weist die Halterung 14 erste und zweite Seitenwangen 20, 22 auf, die parallel zueinander verlaufen und ein an dem Seitenstabilisator 12 bzw. einem ersten Stabilisatorglied 24 vorgesehenes Befestigungsgelenk 26 umgreifen, wobei sich der Lagerbolzen 16 zur schwenkbaren Anbringung des Seitenstabilisators 12 durch die beiden Seitenwangen 20, 22 sowie das Befestigungsgelenk 26, genauer gesagt durch eine in einem Montageauge 28 des Befestigungsgelenks 26 gelagerte Gelenkkugel 30 hindurcherstreckt (siehe hierzu Fig. 3 a-c).

Bei der Halterung 14 handelt es sich um ein aus Stahlblech hergestelltes u-förmiges Blechbiegeteil, das über ein die beiden Seitenwangen 20, 22 verbindendes Querstück 32 mittels mehrerer Gewindeschrauben 34, 36 an einer Montageschnittstelle 38 eines von einem landwirtschaftlichen Traktor 40 umfassten Dreipunkt-Krafthebers 42 angebracht ist, wobei von dem landwirtschaftlichen Traktor 40 vorliegend lediglich ein Ausschnitt einer von diesem umfassten Chassisstruktur dargestellt ist. Die Montageschnittstelle 38 ist als ebener Montageflansch 44 an einer Unterseite 46 eines (strichliniert angedeuteten) Achstrichters 48 ausgebildet, wobei der Achstrichter 48 ein Untersetzungstriebe zum Betreiben eines nicht dargestellten Hinterrads des landwirtschaftlichen Traktors 40 beherbergt und seinerseits mit einem Differentialgehäuse 50 des landwirtschaftlichen Traktors 40 verbunden ist.

Ferner ist der Seitenstabilisator 12 mit einem gabelförmigen Befestigungsende 52 eines zweiten Stabilisatorglieds 54 an einem Befestigungsschenkel 56 eines Unterlenkers 58 angebracht, wobei der Befestigungsschenkel 56 an dem Unterlenker 58 seitlich hervorspringt. Das gabelförmige Befestigungsende 52 ist mittels eines Sicherungsbolzens 60 derart an dem Befestigungsschenkel 56 angebracht, dass ein quer zur Längserstreckung des Unterlenkers 58 drehbares Gelenk gebildet wird.

Der im Heckbereich 62 des landwirtschaftlichen Traktors 40 befindliche Dreipunkt-Kraftheber 42 umfasst symmetrisch angeordnete linke und rechte Unterlenker 58, von denen in Fig. 1 darstellungsbedingt lediglich der in Vorwärtsfahrtrichtung 64 gesehen rechte sichtbar ist. Jedem der beiden Unterlenker 58 ist ein separater Seitenstabilisator 12 bzw. eine separate Arretierungseinrichtung 10 zugeordnet. Die Unterlenker 58 lassen sich mittels eines hydraulischen Hubwerks 66 über eine zugehörige Hubstrebe 68 auf Veranlassung eines Bedieners zwischen einer angehobenen Transportstellung 70 und einer abgesenkten Arbeitsstellung 72 verschwenken. An einem äußeren Ende 74 des Unterlenkers 58 befindet sich ein Kupplungshaken 76, der der lösbaren Anbringung eines komplementär ausgebildeten unteren Kupplungselements 78 einer von einem landwirtschaftlichen Anbaugerät umfassten Geräteschnittstelle dient. Ein (nicht gezeigter) Oberlenker erlaubt ferner die Anbringung eines an der Geräteschnittstelle vorhandenen zentralen oberen Kupplungselements.

Der Seitenstabilisator 12 ist vorliegend hydraulisch steuerbar, wozu die beiden Stabilisatorglieder 24, 54 über einen von dem Seitenstabilisator 12 umfassten Hydraulikzylinder 80 mechanisch miteinander gekoppelt sind. Das erste Stabilisatorglied 24 ist baulicher Bestandteil eines Stabilisatorgehäuses 82, in dem sich ein (nicht sichtbarer) Zylinderraum befindet, der sich über einen Hydraulikanschluss 84 mit unter Druck stehender Hydraulikflüssigkeit beaufschlagen lässt, wohingegen das zweite Stabilisatorglied 54 in einen innerhalb des Zylinderraums längsverschiebbar gelagerten Kolben 86 übergeht. Eine mit dem Hydraulikanschluss 84 kommunizierende Hochdruckleitung 88 ermöglicht es, den Kolben 86 auf Veranlassung eines traktorseitigen Hydrauliksystems innerhalb des Zylinderraums in einen vollständig ausgeschobenen Zustand zu überführen. Da jedem der beiden Unterlenker 58 ein eigener Seitenstabilisator 12 zugeordnet ist, lassen sich die Unterlenker 58 solchermaßen bei angebrachtem Anbaugerät in einer zentrierten Mittenstellung gegeneinander verspannen. Unerwünschte Seitwärtsbewegungen des Anbaugeräts in der angehobenen Transportstellung 70 können so ausgeschlossen werden. Bei Druckentlastung hingegen kann sich der Kolben 86 frei innerhalb des Zylinderraums bewegen, was die Ausführung seitwärts gerichteter Ausgleichsbewegungen des Anbaugeräts in der abgesenkten Arbeitsstellung 72 während der Feldbearbeitung möglich macht. Die Umschaltung zwischen einem solchen Sperr- bzw. Schwimmzustand erfolgt hierbei selbsttätig in Abhängigkeit einer sensorisch erfassten Stellung des hydraulischen Hubwerks 66.

Wie in Fig. 1 zu erkennen ist, weist die Arretierungseinrichtung 10 einen Verschlussmechanismus 90 mit einem federvorgespannten Fanghaken 92 zur lösbaren Ineingriffnahme eines an der Halterung 14 vorgesehenen Haltebolzens 94 auf. Der Haltebolzen 94 ist, wie auch der Lagerbolzen 16, durch jeweils miteinander fluchtende Bohrungen 96, 98 innerhalb der Seitenwangen 20, 22 der Halterung 14 hindurchgesteckt und mittels zugehöriger Wellensicherungen 100, 102 darin befestigt. Bezogen auf die für den Betrieb am Dreipunkt-Kraftheber 42 vorgesehene bzw. spezifizierte Einbaulage 104 der Halterung 14 ist der Lagerbolzen 16 oberhalb des Haltebolzens 94 in Richtung des Differentialgehäuses 50 zurückversetzt angeordnet.

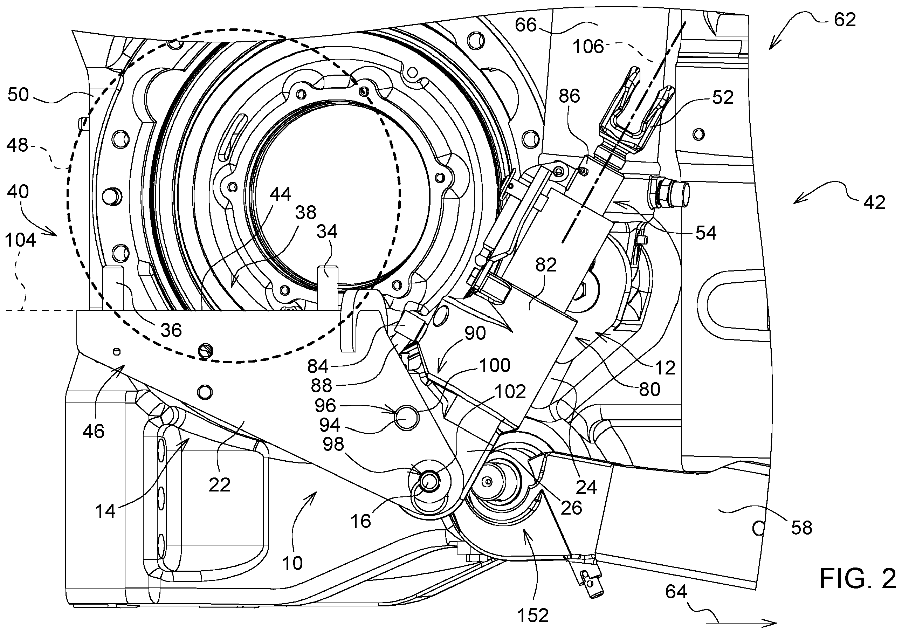

Der Verschlussmechanismus 90 erlaubt es, den Seitenstabilisator 12 bei abgenommenem Unterlenker 58 in einer in Fig. 2 dargestellten vorgegebenen Ruheposition 106 zu arretieren. In der vorgegebenen Ruheposition 106 ist der Seitenstabilisator 12 bezüglich der für den Betrieb am Dreipunkt-Kraftheber 42 vorgesehenen bzw. spezifizierten Einbaulage 104 schräg aufwärts gestellt. Ein unerwünschter Kontakt zwischen einer im Heckbereich 62 des landwirtschaftlichen Traktors 40 anbringbaren Zugdeichsel mit dem Seitenstabilisator 12 lässt sich dann weitgehend ausschließen.

In Fig. 3 a-c ist eine schrittweise dargestellte Verriegelungssequenz beim Verschwenken des in Fig. 1 gezeigten Seitenstabilisators 12 in die vorgegebene Ruheposition 106 wiedergegeben. Die dabei gewählte Schnittansicht offenbart den Aufbau der Arretierungseinrichtung 10 im Detail.

Demgemäß ist an dem Seitenstabilisator 12 bzw. dem Stabilisatorgehäuse 82 als Bestandteil des Verschlussmechanismus 90 eine sich in Schwenkrichtung 108 öffnende Ausnehmung 110 zur formschlüssigen Aufnahme einer Anlagekontur 112 des Haltebolzens 94 ausgebildet, wobei sich der Haltebolzen 94 mittels des Fanghakens 92 innerhalb der Ausnehmung 110 festlegen lässt. Beispielsgemäß ist die Schwenkrichtung 108 des Seitenstabilisators 12 senkrecht zu der durch den Lagerbolzen 16 gebildeten Drehachse 18 orientiert.

Die Ausnehmung 110 verläuft in einem an einer Oberseite 114 des Stabilisatorgehäuses 82 einstückig ausgebildeten Verschlussgehäuse 116. Beispielsgemäß weist der Haltebolzen 94 im Bereich der zur Verriegelung vorgesehenen Anlagekontur 112 einen runden Querschnitt auf, dessen Durchmesser vorliegend kleiner ist als derjenige der angrenzenden, von den Bohrungen 98 innerhalb der Seitenwangen 20, 22 aufgenommenen Bolzenabschnitte. Der in Fig. 3 c gezeigte Formschluss zwischen der Anlagekontur 112 und der Ausnehmung 110 erfolgt hierbei unter Berücksichtigung eines aus Gründen der Verschmutzungstoleranz vorgesehenen Lagerspiels Δd in der Größenordnung von 1 bis 2 Millimetern.

Der Fanghaken 92 umfasst ein in dem Verschlussgehäuse 116 eingebrachtes Sackloch 118, innerhalb dessen ein aus Stahl bestehender Verschlussbolzen 120 längsverschiebbar gelagert **ist.** Sackloch 118 und Verschlussbolzen 120 weisen ineinandergreifende Formmerkmale derart auf, dass ein Verdrehen des Verschlussbolzens 120 um seine eigene Achse innerhalb des Sacklochs 118 unterbunden **wird.** Bei den Formmerkmalen handelt es sich beispielsweise um eine an dem Verschlussbolzen 120 hervorspringende Nase, die in eine entlang einer Wandung des Sacklochs 118 ausgebildete Nut eingreift.

Eine Druckfeder 122 stützt sich einerseits an einem an dem Verschlussbolzen 120 ausgebildeten Absatz 124 sowie andererseits an einem stirnseitigen Abschluss 126 des Sacklochs 118 ab und drängt diesen entsprechend **Fig.** 3 a in eine die **Aus**nehmung 110 sperrende Stellung **128.**

Der Verschlussbolzen 120 weist an einem der Ausnehmung 110 zugewandten Ende 130 einen rampenförmigen Betätigungsabschnitt 132 sowie eine mit der Anlagekontur 112 des Haltebolzens 94 korrespondierende Innenkontur 134 **auf.** Die Innenkontur 134 stellt in der sperrenden Stellung 128 letztlich die Fortführung der Innenkontur 136 der angrenzenden Ausnehmung 110 dar, folgt dieser bis zu einem Scheitelpunkt 138 und verläuft ab hier im Wesentlichen gerade bzw. tangential. Der so gebildete gerade bzw. tangentiale Abschnitt 140 ist senkrecht zur Schwenkrichtung 108 des Seitenstabilisators 12 orientiert, was zu einer besonders sicheren Festlegung des Haltebolzens 94 innerhalb der Ausnehmung 110 führt.

Wie sich in Fig. 3 b erkennen lässt, ist der rampenförmige Betätigungsabschnitt 132 derart ausgeformt, dass die Anlagekontur 112 des Haltebolzens 94 den Verschlussbolzen 120 beim Verschwenken des Seitenstabilisators 12 in Richtung der vorgegebenen Ruheposition 106 in eine die Ausnehmung 110 freigebende Stellung 142 wegdrängt. Der Verschlussmechanismus 90 bildet somit einen Schnappverschluss, bei dem der unter Federvorspannung stehende Verschlussbolzen 120 unter Verriegelung des Seitenstabilisators 12 von selbst in seine Ausgangslage zurückkehrt, sobald der Haltebolzen 94 seine endgültige Lage innerhalb der Ausnehmung 110 eingenommen hat.

An einem der Ausnehmung 110 abgewandten Ende 144 ragt der Verschlussbolzen 120 aus einer in dem stirnseitigen Abschluss 126 ausgebildeten Durchgangsöffnung 146 in Form eines als Griffstück 148 ausgebildeten Betätigungselements heraus. Ein quer durch das Griffstück 148 verlaufender Sicherungssplint 150 dient als Gegenanschlag für den unter Federvorspannung stehenden Verschlussbolzen 120 innerhalb des Sacklochs 118. Das Griffstück 148 erlaubt es, den Verschlussbolzen 120 entgegen der Federvorspannung manuell in eine die Ausnehmung 110 freigebende Stellung 142 auszulenken, sodass der Verschlussmechanismus 90 zum Zwecke der Entriegelung des von Hand betätigbar ist.

Die so geschaffene Arretierungseinrichtung 10 erlaubt einen besonders einfachen Abbau der Unterlenker 58. So wird in einem ersten Schritt der Seitenstabilisator 12 durch Entfernen des Sicherungsbolzens 60 vom Unterlenker 58 gelöst. Danach wird der Seitenstabilisator 12 in einem zweiten Schritt bis zum Einrasten des Haltebolzens 94 am Fanghaken 92 in die vorgegebene Ruheposition 106 hochgeschwenkt und darin verwahrt. In einem dritten Schritt wird der Unterlenker 58 durch Lösen der traktorseitigen Gelenkverbindung 152 abgebaut (siehe hierzu Fig. 1). Dieser Vorgang wird anschließend für den anderen Unterlenker 58 wiederholt, wobei sämtliche Arbeitsschritte bequem von einer einzelnen Person zu bewerkstelligen sind.

Es sei angemerkt, dass die Verwendung der vorstehend beschriebenen Arretierungseinrichtung 10 nicht auf einen bestimmten Stabilisatortyp beschränkt ist, vielmehr kann es sich auch um einen rein mechanischen Seitenstabilisator handeln, wie er in der DE 602 00 422 T2 beschrieben ist.

## Patentansprüche

1. Arretierungseinrichtung, mit einem Seitenstabilisator (12) und einer an einem Dreipunkt-Kraftheber (42) befestigbaren Halterung (14), wobei der Seitenstabilisator (12) mittels eines Lagerbolzens (16) schwenkbar an der Halterung (14) angebracht ist und sich an der Halterung (14) mittels eines Verschlussmechanismus (90) in einer vorgegebenen Ruheposition (106) arretieren lässt, **dadurch gekennzeichnet, dass** der Verschlussmechanismus (90) einen federvorgespannten Fanghaken (92) aufweist, der zur lösbaren Ineingriffnahme eines an der Halterung (14) vorgesehenen Haltebolzens (94) eingerichtet ist.

2. Arretierungseinrichtung nach Anspruch 1, **dadurch gekennzeichnet, dass** die Halterung (14) erste und zweite Seitenwangen (20, 22) aufweist, die ein an dem Seitenstabilisator (12) vorgesehenes Befestigungsgelenk (26) umgreifen, wobei sich der Lagerbolzen (16) zur schwenkbaren Anbringung des Seitenstabilisators (12) durch die beiden Seitenwangen (20, 22) sowie das Befestigungsgelenk (26) hindurcherstreckt.

3. Arretierungseinrichtung nach Anspruch 1 oder 2, **dadurch gekennzeichnet, dass** an dem Seitenstabilisator (12) als Bestandteil des Verschlussmechanismus (90) eine sich in Schwenkrichtung (108) öffnende Ausnehmung (110) zur formschlüssigen Aufnahme einer Anlagekontur (112) des Haltebolzens (94) ausgebildet ist, wobei sich der Haltebolzen (94) mittels des Fanghakens (92) innerhalb der Ausnehmung (110) festlegen lässt.

4. Arretierungseinrichtung nach wenigstens einem der vorhergehenden Ansprüche, **dadurch gekennzeichnet, dass** ein Betätigungselement (148) zur manuellen Auslenkung des Fanghakens (92) in eine die Ausnehmung (110) freigebende Stellung (142) vorhanden ist.

5. Arretierungseinrichtung nach wenigstens einem der vorhergehenden Ansprüche **dadurch gekennzeichnet, dass** der Fanghaken (92) einen rampenförmigen Betätigungsabschnitt (132) derart aufweist, dass der Haltebolzen (94) den Fanghaken (92) beim Verschwenken des Seitenstabilisators (12) in Richtung der vorgegebenen Ruheposition (106) in eine die Ausnehmung (110) freigebende Stellung (142) wegdrängt.

6. Arretierungseinrichtung nach wenigstens einem der vorhergehenden Ansprüche, **dadurch gekennzeichnet, dass** der Seitenstabilisator (12) in der vorgegebenen Ruheposition (106) bezüglich einer für den Betrieb am Dreipunkt-Kraftheber (42) vorgesehenen bzw. spezifizierten Einbaulage (104) schräg aufwärts gestellt ist.

## Claims

1. Locking device, comprising a side stabilizer (12) and a mounting bracket (14) which can be fastened to a three-point power-lift linkage (42), wherein the side stabilizer (12) is attached pivotably to the mounting bracket (14) by means of a bearing pin (16) and can be locked to the mounting bracket (14) by means of a lock mechanism (90) in a predetermined rest position (106), **characterized in that** the lock mechanism (90) has a spring-preloaded catch hook (92) which is designed for releasably engaging into a mounting pin (94) provided on the mounting bracket (14).

2. Locking device according to Claim 1, **characterized in that** the mounting bracket (14) has first and second side cheeks (20, 22) which engage around a fastening joint (26) provided on the side stabilizer (12), wherein the bearing pin (16) extends through the two side cheeks (20, 22) and the fastening joint (26) for pivotably attaching the side stabilizer (12).

3. Locking device according to Claim 1 or 2, **characterized in that** a recess (110) opening in the pivoting direction (108) is formed on the side stabilizer (12) as a component of the lock mechanism (90) for the positively locking reception of a contact contour (112) of the mounting pin (94), wherein the mounting pin (94) can be fixed by means of the catch hook (92) within the recess (110).

4. Locking device according to at least one of the preceding claims, **characterized in that** there is an actuating element (148) for manually deflecting the catch hook (92) into a position (142) releasing the recess (110).

5. Locking device according to at least one of the preceding claims, **characterized in that** the catch hook (92) has a ramp-shaped actuating portion (132) such that the mounting pin (94) pushes the catch hook (92) away into a position (142) releasing the recess (110) when the side stabilizer (12) is pivoted in the direction of the predetermined rest position (106).

6. Locking device according to at least one of the preceding claims, **characterized in that**, in the predetermined rest position (106), the side stabilizer (12) is set obliquely upwards with respect to an installation position (104) provided or specified for operation on the three-point power-lift linkage (42).

## Revendications

1. Dispositif de blocage, avec un stabilisateur latéral (12) et un support (14) pouvant être fixé sur un système de relevage à trois points (42), le stabilisateur latéral (12) étant installé de manière à pouvoir pivoter sur le support (14) au moyen d'un axe de palier (16) et pouvant être bloqué sur le support (14) au moyen d'un mécanisme de fermeture (90) dans une position de repos (106) prédéfinie, **caractérisé en ce que** le mécanisme de fermeture (90) comporte un crochet d'arrêt (92) précontraint par ressort, qui est mis au point pour venir en prise de manière amovible avec un boulon de retenue (94) prévu sur le support (14).

2. Dispositif de blocage selon la revendication 1, **caractérisé en ce que** le support (14) comporte des première et deuxième joues latérales (20, 22) qui entourent une articulation de fixation (26) prévue sur le stabilisateur latéral (12), le boulon de palier (16) destiné à être installé de manière pivotante sur le stabilisateur latéral (12) s'étendant à travers les deux joues latérales (20, 22) et l'articulation de fixation (26).

3. Dispositif de blocage selon la revendication 1 ou 2, **caractérisé en ce qu'**est formé, sur le stabilisateur latéral (12), en tant qu'élément constitutif du mécanisme de fermeture (90), un évidement (110) s'ouvrant dans la direction de pivotement (108) destiné à recevoir par complémentarité de forme un contour d'appui (112) du boulon de retenue (94), le boulon de retenue (94) pouvant être fixé à l'intérieur de l'évidement (110) au moyen du crochet d'arrêt (92).

4. Dispositif de blocage selon au moins l'une des revendications précédentes, **caractérisé en ce qu'**un élément d'actionnement (148) est présent pour dévier manuellement le crochet d'arrêt (92) dans une position (142) libérant l'évidement (110).

5. Dispositif de blocage selon au moins l'une des revendications précédentes, **caractérisé en ce que** le crochet d'arrêt (92) comporte une section d'actionnement (132) en forme de rampe de telle manière que le boulon de retenue (94) repousse le crochet d'arrêt (92) dans une position (142) libérant l'évidement (110) lors du pivotement du stabilisateur latéral (12) en direction de la position de repos (106) prédéfinie.

6. Dispositif de blocage selon au moins l'une des revendications précédentes, **caractérisé en ce que** le stabilisateur latéral (12) est placé à l'oblique vers le haut dans la position de repos (106) prédéfinie par rapport à une position de montage (104) prévue ou spécifiée sur le système de relevage à trois points (42) pour le fonctionnement.
